# EUROPÄISCHE PATENTANMELDUNG

(11) **EP 2 338 617 A2**
(43) Veröffentlichungstag der Anmeldung: **29.06.2011**
(21) Anmeldenummer: 10196289.2
(22) Anmeldetag: 21.12.2010
(51) Int. Cl.: B21D 13/04, B21D 53/04, F28F 3/02

(54) **Verfahren zur Herstellung von Konvektorblechen für Heizkörper, sowie entsprechendes Konvektorblech und Heizkörper damit**

(30) Priorität: 22.12.2009 DE 102009059283
(71) Anmelder: Hydro Aluminium Rolled Products GmbH, 41515 Grevenbroich (DE); Caradon Stelrad B.V., 2200 Herantals (BE)
(72) Erfinder: Benzler, Tobias, 21279 Appel/Grauen (DE); Grauls, Roger, 3971 Heppen/Leopoldsburg (BE); Pritzlaff, Reinhard, 50181 Bedburg (DE); Wojcik, Guy, 1410 Waterloo (BE); Wehner, Torsten, 53332 Bornheim (DE); Meyer, Rolf Heinrich, 21244 Buchholz i.d. Nordheide (DE)
(74) Vertreter: Cohausz & Florack

(57) **Zusammenfassung**

Die Erfindung betrifft ein Verfahren zur Herstellung von Konvektorblechen für Heizkörper. Die Aufgabe, ein Verfahren zur Herstellung von Konvektorblechen für Heizkörper zur Verfügung zu stellen, welches eine deutlich zügigere Fertigung der Konvektorbleche ermöglicht, so dass eine Integration in die bestehende Heizkörperfertigung ermöglicht wird, wird dadurch gelöst, dass die Konvektorbleche aus einem Band aus Aluminium oder einer Aluminiumlegierung hergestellt werden, welches von einem Coil abgehaspelt wird und kontinuierlich umgeformt wird, wobei das Band zumindest teilweise in eine mäanderförmige Querschnittform umgeformt wird und das zumindest mäanderförmig umgeformte Band in Konvektorbleche vereinzelt wird.

## Beschreibung

Die Erfindung betrifft ein Verfahren zur Herstellung von Konvektorblechen für Heizkörper.

Heizkörper werden üblicherweise als Plattenheizkörper, auch als Flachheizkörper, Kompaktheizkörper oder Wärmeplatte bezeichnet, ausgeführt. Sie bestehen aus einem Wärme übertragenden Teil, welcher üblicherweise aus glatten oder profilierten Stahlblechen mit Kanälen für ein Heizmedium gebildet wird, wobei häufig mehrere das Heizmedium führende also Wärme übertragende Teile des Heizkörpers hintereinander angeordnet werden. Zwischen diesen Wärme übertragenden Teilen des Heizkörpers sind üblicherweise zur Verbesserung der konvektiven Wärmeleistung Konvektorbleche angeordnet. Die Konvektorbleche sind zumindest mit einem Wärme übertragenden Teil des Heizkörpers wärmeleitend verbunden. Derartig aufgebaute Heizkörper sind preiswert und universell einsetzbar und einfach in der Konstruktion bzw. Montage. Bisher übliche Konvektorbleche bestehen aus Stahl. Sie werden aus Blechen hergestellt, welche über ein Presswerkzeug in eine mäanderförmige Querschnittform umgeformt werden. Anschließend werden die Konvektorbleche mit einem Wärme übertragenden Teil des Heizkörpers wärmeleitend verbunden, so dass eine gute Wärmeleitung vom Wärme führenden Teil des Heizkörpers zum Konvektorblech erfolgt. Da die Herstellung der mäanderförmigen Querschnittform der Konvektorbleche durch Pressen in einem Presswerkzeug erfolgt, ist diese aufwändig. Das Verfahren lässt sich nur unter enormen Aufwand automatisieren und mit der Fertigung von Heizkörpern kombinieren. Aufgrund der zu großen Fertigungszeiten, welche für die Herstellung der Konvektorbleche benötigt werden, war es bisher nicht möglich, die Herstellung der Konvektorbleche in die Fertigung der Heizkörper selbst zu integrieren, so dass diese händisch in den Fertigungsablauf eingebracht werden müssen. Neben dem personellen und damit verbundenen Kostenaufwand ist diese Fertigungsweise auch relativ Fehler anfällig.

Hiervon ausgehend hat sich die vorliegende Erfindung die Aufgabe gestellt, ein Verfahren zur Herstellung von Konvektorblechen für Heizkörper zur Verfügung zu stellen, welches eine deutlich zügigere Fertigung der Konvektorbleche ermöglicht, so dass eine Integration in die bestehende Heizkörperfertigung ermöglicht wird. Darüber hinaus hat sich die Erfindung zur Aufgabe gemacht ein entsprechendes Konvektorblech sowie einen entsprechend hergestellten Heizkörper vorzuschlagen.

Gemäß einer ersten Lehre der vorliegenden Erfindung wird die aufgezeigte Aufgabe dadurch gelöst, dass die Konvektorbleche aus einem Band aus Aluminium oder einer Aluminiumlegierung hergestellt werden, welches von einem Coil abgehaspelt wird und kontinuierlich umgeformt wird, wobei das Band zumindest teilweise in eine mäanderförmige Querschnittform umgeformt wird und das zumindest teilweise mäanderförmig umgeformte Band in Konvektorbleche vereinzelt wird.

Konvektorbleche aus Aluminium oder einer Aluminiumlegierung sind im Vergleich zu Konvektorblechen aus Stahl bei gleicher Dicke in der Regel leichter umformbar, so dass die Umformgeschwindigkeit grundsätzlich erhöht werden kann. Durch die Verwendung von Bändern aus Aluminium- oder einer Aluminiumlegierung zur Herstellung der Konvektorbleche ergibt sich daher eine erhöhte Ausbringung an Konvektorblechen und damit die Möglichkeit die Herstellung der Konvektorbleche in die Heizkörperfertigung zu integrieren. Aufgrund der besseren Wärmeleiteigenschaften können zudem die Aluminium- oder Aluminiumlegierungsbänder in ihren Banddicken reduziert werden, so dass eine Gewicht- und Materialersparnis erreicht wird, was vor allem zu einer Kostenreduktion führt.

Eine besonders einfache Möglichkeit, dass verwendete Band aus Aluminium oder einer Aluminiumlegierung in eine mäanderförmig verlaufende Querschnittform umzuformen, wird dadurch erreicht, dass mindestens ein Walzenpaar zum kontinuierlichen Umformen des Bandes verwendet wird. Die Verwendung eines Walzenpaares ermöglicht neben der Durchführung des eigentlichen Umformprozesses gleichzeitig den Weitertransport des Bandes, so dass eine kontinuierliche Weiterverarbeitung nach dem Umformen durch die Walzen auf einfach Weise erfolgen kann. Insbesondere können durch die Verwendung der Walzen zum Umformen des Bandes die Fertigungszeiten für die vereinzelten Konvektorbleche einfach reduziert werden.

Gemäß einer weiteren Ausgestaltung des erfindungsgemäßen Verfahrens weisen die Walzen des mindestens einen Walzenpaares jeweils eine Mehrzahl in Längsrichtung der Walzen zumindest teilweise durchgehend verlaufende Stege auf, wobei die Stege optional umlaufend gleichmäßig angeordnet sind und radial nach außen abstehen, wobei während des kontinuierlichen Umformens die Stege der Walzen ineinander greifen, so dass der Steg einer ersten Walze in den Zwischenraum zwischen zwei Stegen der zweiten Walze eintaucht. Hierdurch wird erreicht, dass das Band in die Zwischenräume zwischen den Stegen der jeweiligen Walze durch den Steg der anderen Walze eingedrückt wird. Im Ergebnis wird mit einem einzigen Umformschritt eine mäanderförmig verlaufende Querschnittform in das umzuformende Band eingebracht. Bei gleichmäßig umlaufend angeordneten Stegen erfolgt eine Umformung in eine gleichmäßig verlaufende Querschnittform.

Sind die Stege eines Walzenpaares in Form und Abstand in Umfangsrichtung der Walzen aufeinander abgestimmt, so dass beim Drehen der Walzen in gegenläufigen Richtungen die Vertiefungen zwischen zwei Stegen der einen Walze der Stegform der anderen Walze entspricht, können prinzipiell auch mäanderförmig verlaufende Querschnittsformen in das Band eingebracht werden, welche einen nicht symmetrischen aber wiederkehrenden Verlauf aufweisen. Im einfachsten Fall werden aber identische Stege auf den jeweiligen Walzen verwendet, so dass eine symmetrische, mäanderförmige Querschnittsform erzeugt wird.

Da die Konvektorbleche eine maximale Menge an Wärmeenergie aus den Heizmedien führenden Teilen des Heizkörpers aufnehmen sollen, ist es gemäß einer weiteren Ausgestaltung des erfindungsgemäßen Verfahrens vorteilhaft, dass während des Umformen des Bandes eine zumindest teilweise ebene Kontaktfläche in das mäanderförmige Band zur Befestigung des Konvektorsblechs mit mindestens einem Wärme übertragenden Teil bzw. einem ein Heizmedium führenden Teil des Heizkörpers eingebracht wird. Mit der Größe der Kontaktfläche kann Einfluss auf die Wärmeübertragung von dem ein Heizmedium führenden Teil des Heizkörpers auf das Konvektorblech genommen werden.

Vorzugsweise weisen die Stege der Walzen eine trapezförmige oder dreieckige Querschnittsform auf. Beide Ausführungsformen stellen eine besonders einfache Möglichkeit dar, eine mäanderförmige Querschnittsform in das Band einzuprägen, wobei gleichzeitig eine ebene Kontaktfläche erzeugt wird. Bei trapezförmigen Stegen ist es eine rechteckige Kontaktfläche, bei Stegen mit dreieckiger Querschnittsfläche ist es eine linienförmige Kontaktfläche. Darüber hinaus ist auch vorstellbar, beispielsweise die Flanken eines trapezförmigen Steges ähnlich einem Zahnrad mit einer Rundung auszugestalten, so dass eine vergrößerte Kontaktfläche bereitgestellt wird. Gleichzeitig ist auch denkbar, Stege mit einer anderen Querschnittsform zu verwenden oder die Walzen mit in Umfangsrichtung verlaufenden wellenförmiger Oberfläche auszubilden, um wellenförmige Konvektorbleche zu erzeugen.

Gemäß einer weiteren Ausgestaltung des erfindungsgemäßen Verfahrens weisen die Stege der Walzen Prägestrukturen, vorzugsweise in Umfangsrichtung der Walzen verlaufende Rillen auf. Die Prägestrukturen können einerseits dazu dienen, im Konvektorblech die Konvektion erhöhende Strukturen einzubringen. Andererseits kann unter Verwendung von Prägestrukturen die mechanische Festigkeit der mäanderförmig verlaufenden Konvektorbleche deutlich erhöht werden, wie beispielsweise dies bei in Umfangsrichtung verlaufenden Rillen oder Sicken im Konvektorblech der Fall ist. Es besteht damit die Möglichkeit, die Dicken der Konvektorbleche weiter zu verringern.

Das Umformen des Bandes kann gemäß einer weiteren Ausführungsform des erfindungsgemäßen Verfahrens ein- oder mehrstufig erfolgen. Das einstufige Verfahren sollte, sofern keine komplexe Struktur des Konvektorblechs gefordert ist, bevorzugt werden, da es die wenigsten Arbeitsschritte aufweist. Allerdings ist auch vorstellbar unter Verwendung eines Walzenpaares zunächst das Konvektorblech mäanderförmig vorzuformen und anschließend über ein Folgewerkzeug eine weitere Umformung zur Endform durchzuführen.

Gemäß einer nächsten Ausgestaltung des erfindungsgemäßen Verfahrens werden die vereinzelten Konvektorbleche automatisiert weiterverarbeitet oder automatisiert gestapelt. Auf diese Weise lässt sich das erfindungsgemäße Verfahren einfach in die bestehende Heizkörperfertigung integrieren und die Kosten zur Heizkörperherstellung weiter senken. Ein automatisiertes Stapeln kann beispielsweise dazu dienen, Konvektorbleche für nicht vollautomatisierte Fertigungslinien bereitzustellen.

Gemäß einer weiteren Ausführungsform des erfindungsgemäßen Verfahrens werden bei der automatisierten Weiterverarbeitung die vereinzelten Konvektorbleche mit dem Heizmedium führenden Teil eines Heizkörpers stoffschlüssig verbunden. Hierdurch kann die Fertigung der Heizkörper noch weiter automatisiert werden, so dass die Herstellkosten der Heizkörper gesenkt werden können.

Eine Kostenreduzierung wird gemäß einer weiteren Ausgestaltung des erfindungsgemäßen Verfahrens dadurch erreicht, dass das Band oder das fertige Konvektorblech eine Dicke von 0,1 mm bis 0,5 mm, bevorzugt von 0,15 mm bis 0,5 mm aufweist. Im Vergleich zu Stahlbändern können geringere Banddicken für die Konvektorbleche verwendet werden, wobei aufgrund der verbesserten Wärmeleitfähigkeit der aluminiumbasierten Konvektorbleche identische oder bessere Wärmeabstrahlungsleistungen erzielt werden.

Weist das Band mindestens eine Schicht aus Reinaluminium 99,5 oder aus einer Aluminiumlegierung vom Typ AA3xxx, AA4xxx, AA5xxx, AA6xxx oder vom Typ AA8xxx auf, können die Eigenschaften und die Kosten des für die Konvektorbleche verwendeten Aluminiumbandes auf den spezifischen Heizkörper abgestimmt werden. Beispielsweise werden Aluminiumlegierungen vom Typ AA3xxx und AA8xxx bereits zur Herstellung von Wärmetauschern in Kraftfahrzeugen verwendet. Sie zeichnen sich daher durch eine besonders gute Wärmeleitfähigkeit bei guten Korrosionseigenschaften aus. Eine Aluminiumlegierung vom Typ AA4xxx ermöglicht die einfache Verwendung von recycelten Aluminiumwerkstoffen bei guten Festigkeiten. Die Aluminiumlegierungen vom Typ AA5xxx und AA6xxx weisen üblicherweise hohe Festigkeiten auf, so dass die Dicke des Konvektorblechs minimal gewählt werden kann. Reinaluminium 99.5 lässt sich dagegen besonders schnell und einfach verarbeiten und kann besonders leicht mit dem Heizkörper verbunden werden.

Schließlich wird das erfindungsgemäße Verfahren dadurch weiter verbessert, dass gemäß einer weiteren Ausgestaltung das Band aus einem Verbundwerkstoff besteht, welcher mindestens zwei unterschiedliche Schichten aus Aluminium oder einer Aluminiumlegierung aufweist. Durch die Verwendung von Verbundwerkstoffen besteht die Möglichkeit das Konvektorblech beispielsweise mit einer Lotschicht zu versehen, so dass beim Verbinden der Konvektorbleche mit beispielsweise dem ein Heizmedium führenden Teil des Heizköpers ein Lötprozess verwendet werden kann. Dies ermöglicht eine deutliche Rationalisierung des Herstellverfahrens für erfindungsgemäße Heizkörper, da in einem Lötprozess gleichzeitig alle Verbindungsstellen des Konvektorblechs mit dem Heizkörper innerhalb weniger Sekunden erzeugt werden können. Das aufwändige Fügen des Konvektorblechs beispielsweise über einen Schweißprozess entfällt dann.

Der Verbundwerkstoff kann beispielsweise als plattierter Verbundwerkstoff oder auch durch gleichzeitiges Gießen der unterschiedlichen Aluminiumlegierungsschichten bereitgestellt werden.

Gemäß einer zweiten Lehre der Erfindung wird die oben aufgezeigte Aufgabe auch durch ein Konvektorblech mit einer mäanderförmigen Querschnittform gelöst, wobei das Konvektorblech eine Mehrzahl an Kontaktflächen für einen Wärme übertragenden Teil eines Heizkörpers aufweist und das Konvektorblech aus Aluminium, einer Aluminiumlegierung oder einem Aluminiumverbundwerkstoff besteht. Das erfindungsgemäße Konvektorblech kann auf einfache Weise hergestellt und kostengünstig mit einem Heizkörper verarbeitet werden. Die Kontaktflächen dienen dazu, eine gute Wärmeübertragung vom Heizkörper auf das Konvektorblech zu realisieren und die Gesamtabstrahlleistung zu erhöhen.

Gemäß einer weiteren Ausführungsform des erfindungsgemäßen Konvektorblechs weist dieses eine Dicke von 0,1 mm bis 0,5 mm, bevorzugt 0,15 mm bis 0,5 mm auf. Diese Dicken haben sich zur Bereitstellung eines guten Wärmetransports bei ausreichender mechanischer Festigkeit und minimalem Materialverbrauch bewährt.

Gemäß einer weiteren Lehre der Erfindung wird die Aufgabe auch durch die Verwendung eines Bandes aus Aluminium, einer Aluminiumlegierung oder eines Aluminiumverbundwerkstoffs zur bandweisen, kontinuierlichen Herstellung von erfindungsgemäßen Konvektorblechen für Heizkörper gelöst. Hierzu wird auf die Vorteile des erfindungsgemäßen Verfahrens sowie der damit hergestellten Konvektorbleche verwiesen.

Wird das Konvektorblech nach der Vereinzelung innerhalb derselben Produktionslinie mit einem torsionalen Ultraschallschweißen mit einem Wärme übertragenden Teil eines Heizkörpers verbunden, kann ein besonders wirtschaftliches Herstellverfahren für Heizkörper bereitgestellt werden. Prinzipiell trifft dies auch bei der Verwendung eines Lötvorganges zum Verbinden des Konvektorblechs und Wärme übertragenden Teil eines Heizkörpers zu innerhalb derselben Produktionslinie zu, weil zusätzliche Transportschritte entfallen.

Ferner wird die Aufgabe ebenso durch einen Heizkörper umfassend mindestens einen Wärme übertragenden Teil, welcher mit einem Konvektorblech wärmeleitend verbunden ist, gelöst, wobei das Konvektorblech mit einem erfindungsgemäßen Verfahren hergestellt ist. Der Heizkörper ist deutlich kostengünstiger und weist ein deutlich verringertes Gewicht bei im Wesentlichen gleichen oder verbesserten Wärmeübertragungseigenschaften auf. Die Herstellung erfolgt wie bereits ausgeführt, optional in einem Verfahren inline mit den anderen Produktionsschritten Formen und Vereinzeln des Konvektorblechs.

Die vorliegende Erfindung wird nun anhand von Ausführungsbeispielen in Verbindung mit der Zeichnung näher erläutert. Die Zeichnung zeigt in

| | |
|---|---|
| Fig. 1 | ein erstes Ausführungsbeispiel des erfindungsgemäßen Verfahrens in schematischer Ansicht, |
| Fig. 2a) bis c) | mögliche Querschnittsformen der Stege gemäß dreier weiterer Ausführungsbeispiele sowie |
| Fig. 3 | ein weiteres Ausführungsbeispiel eines erfindungsgemäß hergestellten Konvektorblechs bestehend aus einem Aluminiumverbundwerkstoff. |

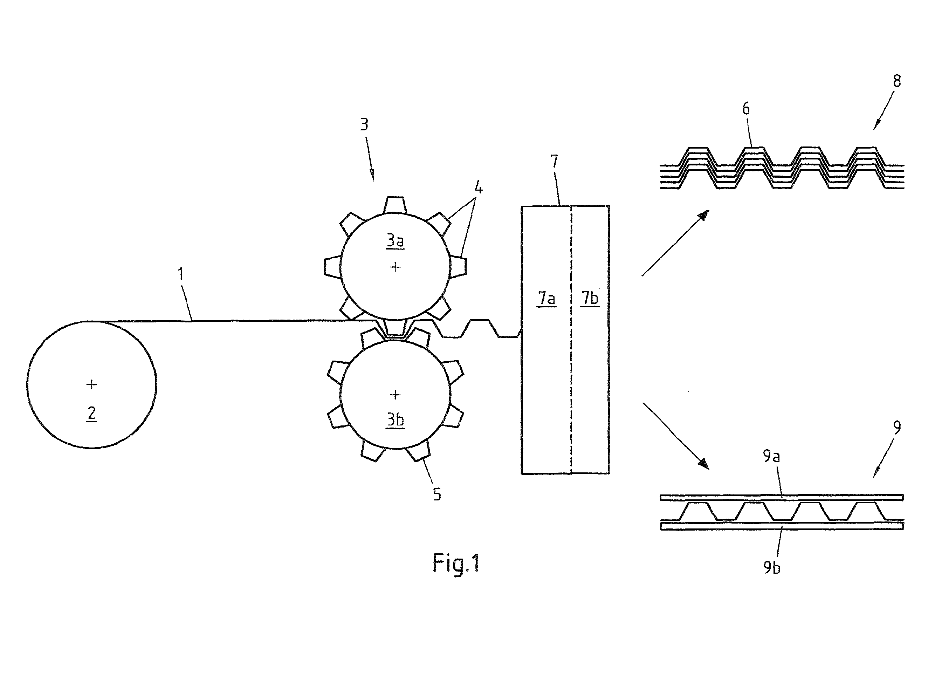

Figur 1 zeigt in einer schematischen Ansicht ein erstes Ausführungsbeispiel des erfindungsgemäßen Verfahrens, bei welchem ein Band 1 von einem Coil 2 abgehaspelt wird und durch ein Walzenpaar 3 kontinuierlich in eine mäanderförmige Querschnittform umgeformt wird. Die Walzen 3a und 3b sind in einer Schnittansicht schematisch dargestellt und weisen zur Umformung des Bandes 1 aus Aluminium oder einer Aluminiumlegierung umlaufend gleichmäßig angeordnete und radial abstehende Stege 4 und 5 auf. Die Walzen 3a, 3b sind so angeordnet, dass die Stege 4 der Walze 3a in die Zwischenräume zwischen den Stegen 5 der Walze 3b und umgekehrt eingreifen. Das zwischen den Walzen 3a, 3b angeordnete Aluminiumband wird dann kontinuierlich zu einer mäanderförmigen Querschnittform umgeformt. Anschließend kann das mäanderförmig geformte Band 1 in Konvektorbleche 6 vereinzelt werden. Dies erfolgt in einer zusätzlichen Vorrichtung 7, welche beispielsweise als einfache Ablenkeinrichtung zur Vereinzelung der Konvektorbleche 6 ausgeführt sein kann.

Im vorliegenden Ausführungsbeispiel führt die Vorrichtung 7 optional jedoch zwei Arbeitsschritte aus, nämlich einerseits ein weiteres Um- bzw. Ausformen 7a des mäanderförmigen Bandes zur Endform des Konvektorblechs und ein Vereinzeln 7b der Konvektorbleche. Das Umformen des Bandes 1 in die mäanderförmige Querschnittform des Konvektorblechs erfolgt in diesem Ausführungsbeispiel optional zweistufig. Im Anschluss an die kontinuierliche Herstellung der Konvektorbleche 6 können diese entweder automatisiert in einem Platinenstapel 8 gestapelt werden oder unmittelbar in die Fertigung der Heizkörper 9 eingebracht werden und mit den ein Heizmedium führenden Teilen des Heizkörpers 9, 9a und 9b stoffschlüssig verbunden werden.

Die stoffschlüssige Verbindung erfolgt üblicherweise durch einen Fügeschritt, beispielsweise ein Schweißen, Ultraschallschweißen aber auch durch einen Lötprozess, welcher hier nicht dargestellt ist. Fig. 1 zeigt zwar nicht das Verbinden des Konvektorblechs mit einem Wärme übertragenden Teil eines Heizkörpers im Detail. Schematisch dargestellt ist aber in Fig. 1 die Herstellung des Konvektorblechs und das Verbinden des Konvektorblechs mit zumindest einem Teil eines Heizkörpers innerhalb derselben Produktionslinie. Vorzugsweise wird beim Verbinden ein Schweißverfahren, insbesondere ein torsionales Ultraschallschweißen oder ein Lötvorgang durchgeführt.

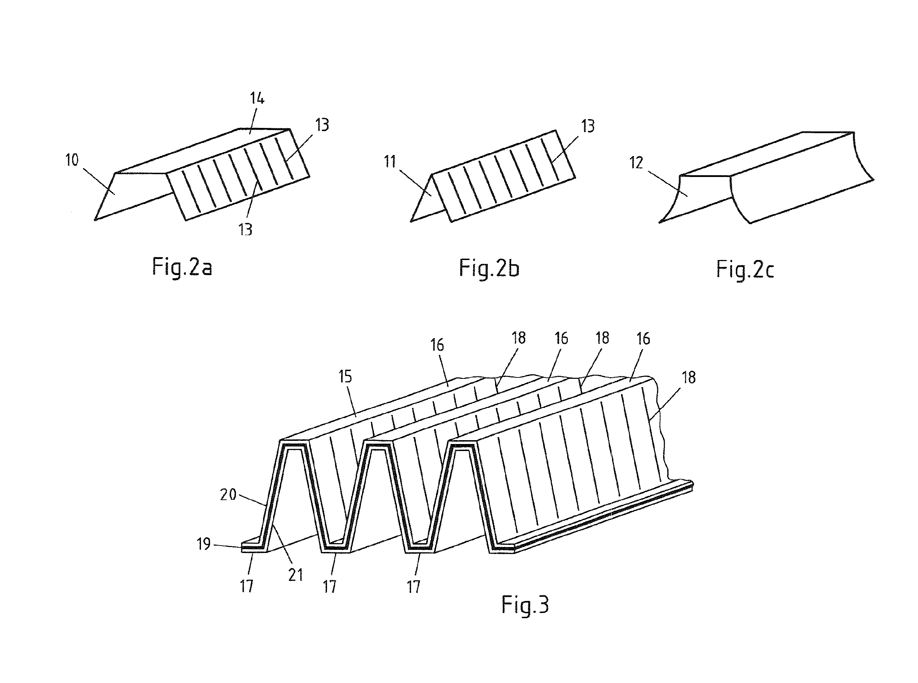

In Figur 2a) bis 2c) sind nun unterschiedliche Ausführungsformen der Stege auf den Umformwalzen 3a und 3b dargestellt. Die Stege 10, 11, 12 sind Beispiele für Querschnittsflächen, welche zur Erzeugung von Konvektorblechen 6 mit unterschiedlichen geometrischen Formen verwendet werden können. So ist die Querschnittsfläche des Stegs 10 trapezförmig, so dass das Konvektorblech eine Kontaktfläche zum Heizmedium führenden Teil eines Heizkörpers in Form eines Rechtecks aufweist, mit welcher das Konvektorblech mit dem Heizkörper verbunden werden kann.

Darüber hinaus zeigt die Figur 2a, dass die Flanken des Stegs 10 mit Prägestrukturen 13 versehen sind, so dass das damit hergestellte Konvektorblech in Umfangsrichtung verlaufende Rillen oder Sicken aufweist. In dem in Figur 2a dargestellten Ausführungsbeispiel des Stegs ist die Stirnseite des Stegs 14 ohne Prägestrukturen dargestellt, wobei jedoch ohne Weiteres denkbar ist, auf die Stirnseite 14 des Stegs 10 mit prägenden Strukturen auszubilden. Eine linienförmige Kontaktfläche kann mit Walzen 3a, 3b erzeugt werden, die Stege umfasst, die eine dreieckige Querschnittsfläche aufweisen. Auch hier sind die Prägestrukturen 13 auf den Flanken des Stegs 11 dargestellt. Die Prägestrukturen 13 müssen aber nicht, wie in Figur 2a und 2b dargestellt, umlaufend verlaufen, sondern können auch beliebige Strukturen annehmen, um beispielsweise die Konvektionsfläche des Konvektorblechs zu erhöhen bzw. eine Verwirbelung der Luft zur besseren Wärmeübertragung in der Nähe des Konvektorblechs zu erreichen.

Ein weiteres Ausführungsbeispiel einer Querschnittsfläche für die prägenden Stege der Walzen 3a, 3b zeigt die Figur 2c in dem Steg 12. die Seitenflächen sind ähnlich eines Zahnrades gebogen ausgebildet, so dass die Umformwalzen im Schnitt die Form eines Zahnrades aufweisen. Durch die gebogenen Seitenflächen des Stegs 12 kann beispielsweise die Kontaktfläche vergrößert werden. Darüber hinaus ist denkbar, dass die Stege der Walzen im Radialschnitt das Aussehen einer um die Walze laufenden Welle oder Sinusfunktionen aufweisen (hier nicht dargestellt) und das resultierende Konvektorblech insofern eine wellenförmige Querschnittsform hat.

Ein mit dem erfindungsgemäßen Verfahren hergestelltes Konvektorblech 15 zeigt die Figur 3. Das Konvektorblech 15 weist flache Kontaktflächen 16, 17 auf, mit welchen das Konvektorblech 15 mit dem Heizkörper, vorzugsweise mit den Heizmedien führenden Teilen eines Heizkörpers verbunden wird. Darüber hinaus weist das Konvektorblech zusätzlich Prägestrukturen 18 auf, die zur mechanischen Verstärkung des Konvektorblechs 15 sowie zur Vergrößerung der Oberfläche des Konvektorblechs 15 beitragen.

Das Konvektorblech 15 dieses Ausführungsbeispiels ist zudem aus einem Aluminiumverbundwerkstoff hergestellt, welcher eine Kernschicht 19 aufweist und auf beiden Seiten mit einer zusätzlichen Schicht 20, 21 beschichtet ist. Vorzugsweise bestehen die äußeren Aluminiumschichten 20, 21 aus einem Aluminiumlot, um zu ermöglichen, dass das Konvektorblech während der Herstellung des Heizkörpers 9 mit dem Heizkörper verlötet werden kann. Dieses Verfahren ist besonders effektiv, da es gleichzeitig eine Vielzahl von Kontaktstellen erzeugt. Die innere Aluminiumschicht des Konvektorblechs wird üblicher Weise aus einem Reinaluminium 99,5 oder durch Aluminiumlegierungen vom Typ AA3xxx, AA4xxx, AA5xxx, AA6xxx oder AA8xxx hergestellt, um den spezifischen Anforderungen an das Konvektorblech gerecht zu werden.

## Patentansprüche

1. Verfahren zur Herstellung von Konvektorblechen für Heizkörper,
**dadurch gekennzeichnet, dass** die Konvektorbleche aus einem Band aus Aluminium oder einer Aluminiumlegierung hergestellt werden, welches von einem Coil abgehaspelt wird und kontinuierlich umgeformt wird, wobei das Band zumindest teilweise in eine mäanderförmige Querschnittform umgeformt wird und das zumindest teilweise mäanderförmig umgeformte Band in Konvektorbleche vereinzelt wird und das Konvektorblech eine Dicke von 0,1 mm bis 0,5 mm, optional 0,15 mm bis 0,5 mm aufweist.

2. Verfahren nach Anspruch 1,
**dadurch gekennzeichnet, dass** mindestens ein Walzenpaar zum kontinuierlichen Umformen des Bandes verwendet wird.

3. Verfahren nach Anspruch 1 oder 2,
**dadurch gekennzeichnet, dass** die Walzen des mindestens einen Walzenpaares jeweils eine Mehrzahl in Längsrichtung der Walzen zumindest teilweise durchgehend verlaufende Stege aufweisen, wobei die Stege optional umlaufend gleichmäßig angeordnet sind und radial nach außen abstehen, wobei während des kontinuierlichen Umformens die Stege der Walzen ineinander greifen, so dass der Steg einer ersten Walze in den Zwischenraum zwischen zwei Stegen der zweiten Walze eintaucht.

4. Verfahren nach einem der Ansprüche 1 bis 3,
**dadurch gekennzeichnet, dass** während des Umformen des Bandes eine zumindest teilweise ebene Kontaktfläche in das mäanderförmige Band zur Befestigung des Konvektorsblechs mit mindestens einem ein Heizmedium führenden Teil des Heizkörpers eingebracht wird.

5. Verfahren nach Anspruch 3 oder 4,
**dadurch gekennzeichnet, dass** die Stege der Walzen eine trapezförmige oder dreieckige Querschnittsform aufweisen.

6. Verfahren nach einem der Ansprüche 3 bis 5,
**dadurch gekennzeichnet, dass** die Stege der Walzen Prägestrukturen, vorzugsweise in Umfangsrichtung verlaufende Rillen aufweisen.

7. Verfahren nach einem der Ansprüche 1 bis 6,
**dadurch gekennzeichnet, dass** das Umformen des Bandes ein- oder mehrstufig erfolgt.

8. Verfahren nach einem der Ansprüche 1 bis 7,
**dadurch gekennzeichnet, dass** die vereinzelten Konvektorbleche automatisiert weiterverarbeitet oder automatisiert gestapelt werden.

9. Verfahren nach einem der Ansprüche 1 bis 8,
**dadurch gekennzeichnet, dass** bei der automatisierten Weiterverarbeitung die vereinzelten Konvektorbleche mit dem Wärme übertragenden Teil eines Heizkörpers stoffschlüssig verbunden werden.

10. Verfahren nach einem der Ansprüche 1 bis 9,
**dadurch gekennzeichnet, dass** das Band mindestens eine Schicht aus Reinaluminium 99,5 oder aus einer Aluminiumlegierung vom Typ AA3xxx, AA4xxx, AA5xxx, AA6xxx oder vom Typ AA8xxx aufweist.

11. Verfahren nach einem der Ansprüche 1 bis 10,
**dadurch gekennzeichnet, dass** das Band aus einem Aluminiumverbundwerkstoff besteht, welcher mindestens zwei Schichten aus Aluminium oder einer Aluminiumlegierung aufweist.

12. Konvektorblech (6,15) für einen Heizkörper (9), hergestellt nach einem Verfahren gemäß Anspruch 1 bis 11, mit einer mäanderförmigen Querschnittform, wobei das Konvektorblech (6,15) eine Mehrzahl an Kontaktflächen (16,17) für den wärmeübertragenden Teil eines Heizkörpers aufweist, das Konvektorblech aus Aluminium, einer Aluminiumlegierung oder einem Aluminiumverbundwerkstoff besteht und das Konvektorblech eine Dicke von 0,1 mm bis 0,5mm, optional 0,15 mm bis 0,5 mm aufweist.

13. Verwendung eines Bandes aus Aluminium, einer Aluminiumlegierung oder eines Aluminiumverbundwerkstoffs zur bandförmigen Herstellung von Konvektorblechen für Heizkörper gemäß einem der Ansprüche 12.

14. Verfahren zur Herstellung eines Heizkörpers unter Verwendung eines Konvektorblechs, hergestellt nach einem der Ansprüche 1 bis 11, wobei das Konvektorblech nach der Vereinzelung innerhalb derselben Produktionslinie mit einem torsionalem Ultraschallschweißen mit einem Wärme übertragenden Teil eines Heizkörpers verbunden wird.

15. Heizkörper (9) umfassend mindestens einen Wärme übertragenden Teil (9a, 9b), welcher mit einem Konvektorblech (6,15) wärmeleitend verbunden ist, wobei das Konvektorblech mit einem Verfahren nach einem der Ansprüche 1 bis 11 hergestellt ist.
